# EUROPÄISCHE PATENTANMELDUNG

(11) **EP 2 568 185 A2**
(43) Veröffentlichungstag der Anmeldung: **13.03.2013**
(21) Anmeldenummer: 12183329.7
(22) Anmeldetag: 06.09.2012
(51) Int. Cl.: F16C 3/02

(54) **Drehwelle und Anschlusselement**

(30) Priorität: 07.09.2011 DE 102011053342
(71) Anmelder: Technische Universität Darmstadt, 64289 Darmstadt (DE)
(72) Erfinder: Schürmann, Helmut, 67133 Maxdorf (DE); Dickhut, Tobias, 65428 Rüsselsheim (DE)
(74) Vertreter: Katscher Habermann Patentanwälte

(57) **Zusammenfassung**

Die Erfindung betrifft eine Drehwelle (1) und ein Anschlusselement (6). Die Drehwelle (1) ist mit dem Anschlusselement (6) durch eine kraftschlüssige Verbindung in einem Krafteinleitungsbereich (3) zur Übertragung eines Drehmoments drehfest und biegesteif verbunden. Die Drehwelle (1) besteht aus einem Faserverbundwerkstoff. In dem Krafteinleitungsbereich (3) ist mindestens ein erstes Zusatzelement angeordnet, wobei das mindestens eine erste Zusatzelement dazu geeignet ist, das in dem Krafteinleitungsbereich (3) zwischen der Drehwelle (1) und dem Anschlusselement (6) übertragbare Drehmoment zu erhöhen. Bei dem mindestens einen ersten Zusatzelement handelt es sich um einen Stützring (5), der so in dem Krafteinleitungsbereich (3) angeordnet ist, dass der Stützring (5) sowohl kraftschlüssig und/oder formschlüssig mit der Drehwelle (1) als auch kraftschlüssig und/oder formschlüssig mit dem Anschlusselement (6) verbunden ist.

## Beschreibung

Die Erfindung betrifft eine Drehwelle und ein Anschlusselement, wobei die Drehwelle mit dem Anschlusselement durch eine kraftschlüssige Verbindung in einem Krafteinleitungsbereich zur Übertragung eines Drehmoments drehfest und biegesteif verbunden ist, und wobei die Drehwelle aus einem Faserverbundwerkstoff besteht.

Drehwellen werden zur Übertragung von Drehmomenten beispielsweise in Antriebssträngen von Kraftfahrzeugen eingesetzt. Zur Herstellung einer drehfesten und biegesteifen Verbindung zwischen einer Drehwelle und weiteren Komponenten des Antriebsstrangs wie zum Beispiel einem Getriebe werden geeignete Anschlusselemente eingesetzt. Dabei muss zwischen der Drehwelle und dem Anschlusselement eine drehfeste und biegesteife Verbindung hergestellt werden, die dazu geeignet ist, ein ausreichend großes Drehmoment von bis zu mehreren 1000Nm zu übertragen. Üblicherweise werden die Drehwellen und die Anschlusselemente aus Stahl bzw. aus einem geeigneten Metall hergestellt.

Es ist aber auch bekannt, Drehwellen aus einem Faserverbundwerkstoff herzustellen. Auf diese Weise kann das Gewicht der üblicherweise aus Stahl hergestellten Drehwellen deutlich reduziert werden. Derartige Drehwellen werden üblicherweise als Hohlwellen ausgestaltet.

Die Drehwellen aus einem Faserverbundwerkstoff und die Anschlusselemente aus Stahl werden meistens kraftschlüssig miteinander verbunden. Eine kraftschlüssige Verbindung ist leicht und kostengünstig herstellbar. Zur Herstellung einer solchen kraftschlüssigen Verbindung kann beispielsweise ein Endbereich der Drehwelle über einen entsprechend angepassten Endbereich des Anschlusselements geschoben und die beiden Endbereiche pressend miteinander verbunden werden. Die drehfest miteinander verbundenen Endbereiche bilden den Krafteinleitungsbereich.

Das maximale Drehmoment, dass durch eine kraftschlüssige Verbindung von der Drehwelle auf das Anschlusselement übertragen werden kann, ist unter anderem von der Größe der Fügefläche abhängig, die der Fläche entspricht, in der die Endbereiche eng aneinander anliegend kraftschlüssig miteinander verbunden sind. Je größer die Fügefläche ist, umso größer wird beispielsweise die zwischen der Drehwelle und dem Anschlusselement durch die kraftschlüssige Verbindung auftretende Haftreibung und umso größere Drehmomente können über diese Verbindung übertragen werden.

Um bei konstanten Durchmessern der Drehwelle und des Anschlusselements die Fügefläche zu vergrößern und so die jeweiligen Anforderungen hinsichtlich des maximal übertragbaren Drehmoments zu erfüllen, wird üblicherweise der Krafteinleitungsbereich verlängert, in dem die Endbereiche der Drehwelle und des Anschlusselements miteinander kraftschlüssig verbunden werden. Dadurch wird in dem von den Endbereichen gebildeten Krafteinleitungsbereich eine vergleichsweise hohe Masse durch das längere Anschlusselement aus Stahl eingebracht. Dies beeinflusst beispielsweise die erste biegekritische Eigenfrequenz des Antriebsstrangs, so dass die übertragbare maximale Drehzahl beispielsweise verringert wird. Durch den verlängerten Krafteinleitungsbereich erhöht sich das Gewicht des Anschlusselements und der Herstellungsaufwand für die kraftschlüssige Verfügung der Drehwelle mit dem Anschlusselement.

Als Aufgabe der Erfindung wird es daher angesehen, eine Drehwelle und ein Anschlusselement so auszugestalten, dass möglichst hohe Drehmomente übertragen werden können und das Gewicht der Drehwelle und des Anschlusselements möglichst gering ist.

Diese Aufgabe wird erfindungsgemäß dadurch gelöst, dass in dem Krafteinleitungsbereich mindestens ein erstes Zusatzelement angeordnet ist, wobei das mindestens eine erste Zusatzelement dazu geeignet ist, das in dem Krafteinleitungsbereich zwischen der Drehwelle und dem Anschlusselement übertragbare Drehmoment zu erhöhen. Bei gleichem zu übertragenden Drehmoment kann durch die Einbringung eines solchen Zusatzelements der Krafteinleitungsbereich verkürzt werden, so dass ein kürzeres und damit ein leichteres Anschlusselement aus Stahl eingesetzt werden kann.

Um das Gewicht deutlich reduzieren zu können ist erfindungsgemäß vorgesehen, dass es sich bei dem mindestens einen ersten Zusatzelement um einen Stützring handelt, der so in dem Krafteinleitungsbereich angeordnet ist, dass der Stützring sowohl kraftschlüssig und/oder formschlüssig mit der Drehwelle als auch kraftschlüssig und/oder formschlüssig mit dem Anschlusselement verbunden ist.

Dabei ist vorteilhafterweise vorgesehen, dass der Stützring an der Drehwelle und an dem Anschlusselement in dem Krafteinleitungsbereich anliegt und die Drehwelle und das Anschlusselement umschließt. Beispielsweise ist es möglich, einen Stützring an einer Außenseite der kraftschlüssig miteinander verbundenen Drehwelle und dem Anschlusselement durch Pressen anzubringen und so eine weitere kraftschlüssige Verbindung zwischen der Drehwelle und dem Anschlusselement herzustellen. Es ist aber auch denkbar, einen Stützring über die Drehwelle oder das Anschlusselement in den Krafteinleitungsbereich zu schieben und durch Schrumpfen eine weitere kraftschlüssige Verbindung zwischen der Drehwelle und dem Anschlusselement herzustellen. Der Stützring kann beispielsweise aus Metall oder aus einem anderen geeigneten Werkstoff bestehen.

Es ist auch möglich und in einigen Anwendungsfällen zweckmäßig, den Stützring auf einer Innenseite der Drehwelle und des Anschlusselements anzuordnen. Zudem ist es möglich, beispielsweise durch die mindestens bereichsweise Anbringung geeigneter Verzahnungen auf der Drehwelle, auf dem Anschlusselement und auf dem Stützring ausschließlich oder zusätzlich eine formschlüssige Verbindung zwischen Stützring und der Drehwelle bzw. dem Anschlusselement herzustellen.

Um das Gewicht des Krafteinleitungsbereichs weiter zu reduzieren, ist vorteilhafterweise vorgesehen, dass der Stützring aus einem Faserverbundwerkstoff besteht. Der Stützring aus Faserverbundwerkstoff kann beispielsweise in dem Krafteinleitungsbereich auf die Drehwelle und das Aufschlusselement aufgepresst sein.

Das Gewicht des Anschlusselements kann erfindungsgemäß dadurch weiter verringert werden, dass das Anschlusselement aus einem Faserverbundwerkstoff besteht. Beispielsweise kann das Anschlusselement aus einem Faserkunststoffverbund bestehen.

Gemäß einer besonders vorteilhaften Ausgestaltung der Erfindung ist vorgesehen, dass in dem Krafteinleitungsbereich mindestens ein zweites Zusatzelement angeordnet ist, um das in dem Krafteinleitungsbereich von der Drehwelle auf das Anschlusselement und von dem Anschlusselement auf die Drehwelle übertragbare Drehmoment zusätzlich zu erhöhen.

Das übertragbare Drehmoment kann gemäß einer Ausgestaltung des Erfindungsgedankens in vorteilhafter Weise dadurch erhöht werden, dass es sich bei dem mindestens einen ersten Zusatzelement und/oder dem mindestens einen zweiten Zusatzelement um Formschlusselemente handelt, die in einem Bereich einer kraftschlüssigen Verbindung zwischen der Drehwelle und dem Anschlusselement und/oder zwischen der Drehwelle und dem Stützring und/oder zwischen dem Anschlusselement und dem Stützring angeordnet sind und dazu geeignet sind, einen Reibwert der jeweiligen kraftschlüssigen Verbindung zu erhöhen.

Bei den Formschlusselementen kann es sich vorteilhafterweise um Drähte handeln. Die Drähte können beispielsweise während des Fügevorgangs in axialer Richtung der Drehwelle und des Anschlusselements auf die jeweiligen Fügeflächen aufgebracht sein.

Es ist aber auch möglich und erfindungsgemäß vorgesehen, dass es sich bei den Formschlusselementen um Thermoplastringe handelt.

In einer alternativen Ausgestaltung der Erfindung ist vorteilhafterweise vorgesehen, dass es sich bei den Formschlusselementen um Siliziumkarbid- und/oder Mikro-Pulver handelt.

Weitere Einzelheiten der Erfindung werden anhand der in der Zeichnung dargestellten Ausführungsbeispiele erläutert.

Es zeigt:
Figur 1 eine schematische Darstellung einer auf ein Stahlanschlusselement aufgepressten Drehwelle aus einem Faserverbundwerkstoff und ein auf einer Außenseite der Drehwelle und des Anschlusselements aufgepressten Stützring aus einem Faserverbundwerkstoff,
Figur 2a eine schematische Darstellung einer kraftschlüssig mit einem Anschlusselement verbundenen Drehwelle, wobei das Anschlusselement und die Drehwelle aus einem Faserverbundwerkstoff bestehen und in dem Fügebereich der Drehwelle und des Anschlusselements Formschlusselemente angeordnet sind,
Figur 2b eine schematische Darstellung eines Querschnitts des in Figur 2a dargestellten Krafteinleitungsbereichs,
Figur 3a eine schematische Darstellung einer Drehwelle, eines Anschlusselements und eines Stützrings, wobei die Drehwelle, das Anschlusselement und der Stützring aus einem Faserkunststoffverbund hergestellt sind und zwischen dem Anschlusselement und der Drehwelle sowie zwischen der Drehwelle und dem Stützring Formschlusselemente angeordnet sind,
Figur 3b eine schematische Darstellung eines Querschnitts des in Figur 3a dargestellten Krafteinleitungsbereichs.

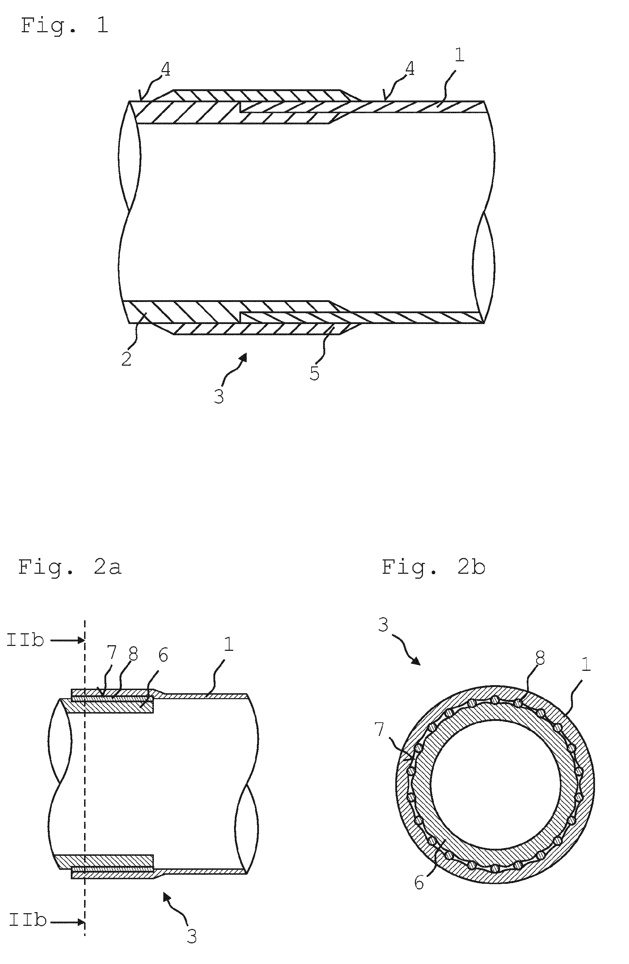

In Figur 1 ist schematisch eine Schnittansicht einer Drehwelle 1 aus einem Faserverbundwerkstoff dargestellt, wobei die Drehwelle 1 kraftschlüssig mit einem Anschlusselement 2 aus Stahl in einem Krafteinleitungsbereich 3 verbunden ist. Zur Erhöhung des in dem Krafteinleitungsbereich 3 übertragbaren Drehmoments ist an einer Außenseite 4 der Drehwelle 1 und des Anschlusselements 2 ein Stützring 5 aus einem Faserverbundwerkstoff aufgepresst. Auf diese Weise kann die Länge des Anschlusselements 2 aus Stahl verkürzt werden und die dadurch verringerte Fügefläche durch die Verwendung des Stützrings 5 ausgeglichen werden.

Figur 2a zeigt eine schematische Schnittansicht einer Drehwelle 1 aus einem Faserverbundwerkstoff und einem kraftschlüssig mit der Drehwelle 1 verbundenen Anschlusselement 6 aus einem Faserverbundwerkstoff. Figur 2b zeigt eine schematische Darstellung des Querschnitts des in Figur 2a dargestellten Krafteinleitungsbereichs 3. Zur Erhöhung des in dem Krafteinleitungsbereich 3 übertragbaren Drehmoments sind an der Fügefläche 7 in axialer Richtung verlaufende Drähte 8 angeordnet. Zur Verdeutlichung weisen die Drähte 8 in dieser schematischen Darstellung einen ungewöhnlich großen Durchmesser auf. Üblicherweise werden dünne Drähte als Formschlusselemente eingesetzt. Durch die zwischen der Drehwelle 1 und dem Anschlusselement 6 angeordneten Drähte 8 werden die im Bereich der Fügefläche 7 auftretenden Reibungskräfte zwischen der Drehwelle und dem Anschlusselement weiter erhöht.

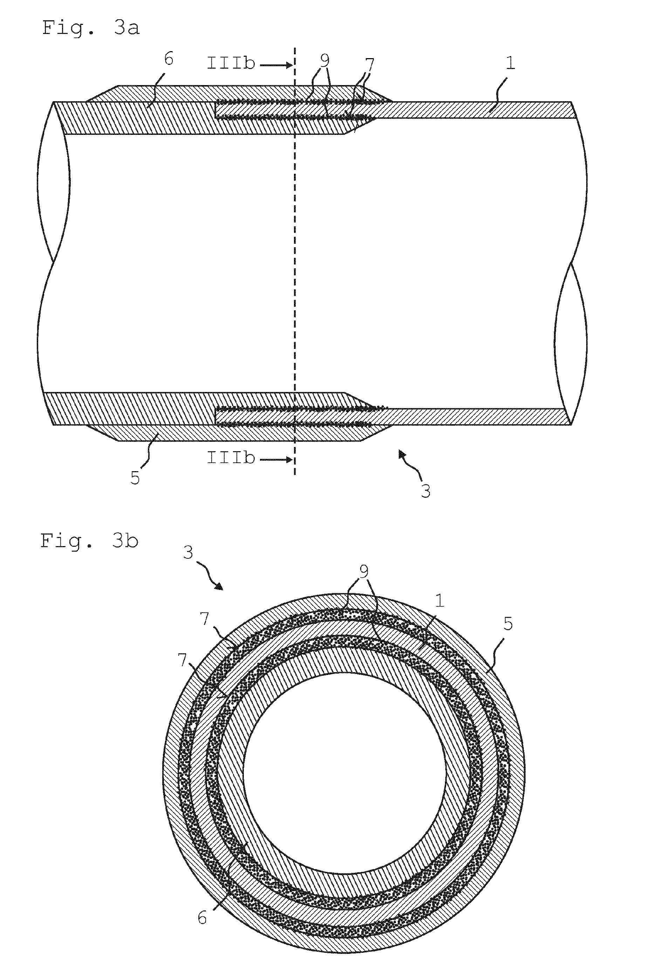

In Figur 3a und Figur 3b ist schematisch eine Drehwelle 1, die kraftschlüssig mit einem Anschlusselement 6 verbunden ist. Die Drehwelle 1 und das Anschlusselement 6 sind zudem kraftschlüssig mit einem Stützring 5 verbunden. Der Stützring 5, das Anschlusselement 6 und die Drehwelle 1 bestehen aus einem Faserkunststoffverbund. Im Bereich der Fügeflächen 7 zwischen Anschlusselement 6 und Drehwelle 1, zwischen Anschlusselement 6 und Stützring 5 und zwischen Drehwelle 1 und Stützring 5 ist jeweils Mikro-Pulver 9 zur Erhöhung des über den Krafteinleitungsbereich 3 übertragbaren Drehmoments angeordnet.

## Patentansprüche

1. Drehwelle (1) und Anschlusselement(2, 6), wobei die Drehwelle (1) mit dem Anschlusselement (2, 6) durch eine kraftschlüssige Verbindung in einem Krafteinleitungsbereich (3) zur Übertragung eines Drehmoments drehfest und biegesteif verbunden ist, und wobei die Drehwelle (1) aus einem Faserverbundwerkstoff besteht, **dadurch gekennzeichnet, dass** in dem Krafteinleitungsbereich (3) mindestens ein erstes Zusatzelement angeordnet ist, wobei das mindestens eine erste Zusatzelement dazu geeignet ist, das in dem Krafteinleitungsbereich (3) zwischen der Drehwelle (1) und dem Anschlusselement (2, 6) übertragbare Drehmoment zu erhöhen.

2. Drehwelle (1) und Anschlusselement (2, 6) gemäß Anspruch 1, **dadurch gekennzeichnet, dass** es sich bei dem mindestens einen ersten Zusatzelement um einen Stützring (5) handelt der so in dem Krafteinleitungsbereich (3) angeordnet ist, dass der Stützring (5) sowohl kraftschlüssig und/oder formschlüssig mit der Drehwelle (1) als auch kraftschlüssig und/oder formschlüssig mit dem Anschlusselement (2, 6) verbunden ist.

3. Drehwelle (1) und Anschlusselement (2, 6) gemäß Anspruch 2, **dadurch gekennzeichnet, dass** der Stützring (5) an der Drehwelle (1) und an dem Anschlusselement (2, 6) in dem Krafteinleitungsbereich (3) anliegt und die Drehwelle (1) und das Anschlusselement (2, 6) umschließt.

4. Drehwelle (1) und Anschlusselement (2, 6) gemäß einem der Ansprüche 2 bis 3, **dadurch gekennzeichnet, dass** der Stützring (5) aus einem Faserverbundwerkstoff besteht.

5. Drehwelle (1) und Anschlusselement (2, 6) gemäß einem der Ansprüche 2 bis 4, **dadurch gekennzeichnet, dass** der Stützring (5) auf die Drehwelle (1) und das Anschlusselement (2, 6) aufgewickelt oder aufgepresst ist.

6. Drehwelle (1) und Anschlusselement (2, 6) gemäß einem der voranstehenden Ansprüche, **dadurch gekennzeichnet, dass** das Anschlusselement (2, 6) aus einem Faserverbundwerkstoff besteht.

7. Drehwelle (1) und Anschlusselement (2, 6) gemäß einem der voranstehenden Ansprüche, **dadurch gekennzeichnet, dass** in dem Krafteinleitungsbereich (3) mindestens ein zweites Zusatzelement angeordnet ist, um das in dem Krafteinleitungsbereich (3) von der Drehwelle (1) auf das Anschlusselement (2, 6) und von dem Anschlusselement (2, 6) auf die Drehwelle (1) übertragbare Drehmoment zusätzlich zu erhöhen.

8. Drehwelle (1) und Anschlusselement (2, 6) gemäß einem der voranstehenden Ansprüche, **dadurch gekennzeichnet, dass** es sich bei dem mindestens einen ersten Zusatzelement und/oder dem mindestens einen zweiten Zusatzelement um Formschlusselemente handelt die in einem Bereich einer kraftschlüssigen Verbindung zwischen der Drehwelle (1) und dem Anschlusselement (2, 6) und/oder zwischen der Drehwelle (1) und dem Stützring (5) und/oder zwischen dem Anschlusselement (2, 6) und dem Stützring (5) angeordnet sind und dazu geeignet sind einen Reibwert der jeweiligen kraftschlüssigen Verbindung zu erhöhen.

9. Drehwelle (1) und Anschlusselement (2, 6) gemäß einem der Ansprüche 7 und 8, **dadurch gekennzeichnet, dass** es sich bei den Formschlusselementen um Drähte (8) handelt.

10. Drehwelle (1) und Anschlusselement (2, 6) gemäß einem der Ansprüche 7 bis 9, **dadurch gekennzeichnet, dass** es sich bei den Formschlusselementen um Thermoplastringe handelt.

11. Drehwelle (1) und Anschlusselement (2, 6) gemäß einem der Ansprüche 7 bis 10, **dadurch gekennzeichnet, dass** es sich bei den Formschlusselementen um Siliziumkarbid und/oder Mikro-Pulver (9) handelt.
